# EUROPEAN PATENT SPECIFICATION

(11) **EP 3 177 742 B1**
(45) Date of publication and mention of the grant of the patent: **25.04.2018**
(21) Application number: 15744563.6
(22) Date of filing: 30.07.2015
(51) Int. Cl.: C21B 3/08

(54) **SLAG GRANULATION SYSTEM**
SCHLACKENGRANULIERUNGSSYSTEM
SYSTÈME DE GRANULATION DE SCORIES

(30) Priority: 08.08.2014 GB 201414064
(43) Date of publication of application: 14.06.2017
(73) Proprietor: Primetals Technologies Austria GmbH, 4031 Linz (AT)
(72) Inventor: MCDONALD, Ian James, Middlesbrough TS7 9AR (GB)
(74) Representative: Metals@Linz
(86) International application number: PCT/EP2015/067476
(87) International publication number: WO 2016/020253

(56) References cited:
- WO-A1-2013/030016
- WO-A1-2014/079796
- WO-A2-2014/079797
- KR-B1- 101 400 315

## Description

This invention relates to a dry slag granulation system, in particular one with waste heat recovery.

In a dry slag granulation system for granulating molten metallurgical slag into pellets using air as the primary as described for example in WO2014/079797A2 there is a tendency to oversupply air to ensure that the granulated material produced does not re-agglomerate. However, there is a cost associated with this, in that power is required to supply the air. Furthermore, if waste heat recovery is combined with the slag granulation process, an oversupply of air may lead to a reduction in the temperature of the air extracted through a thermal air off-take, limiting the usefulness of a combined slag granulation and heat recovery plant.

According to an aspect of the invention there is provided a method of controlling a supply of coolant gas to a dry slag granulation system, the system comprising: a rotary atomising granulator; a slag receptacle, for supporting a slag bed which is formed thereon when slag particles are expelled from the granulator, the slag receptacle comprising a plurality of cooling inlets for cooling respective zones of the slag bed; and at least one height detector and at least one temperature detector, for determining the height and temperature of the slag bed in the zones, the method comprising: determining the height of the slag bed in the zones; determining the temperature of the slag bed in the zones; determining the energy density of the slag bed in the zones; and according to the energy density, selectively controlling a supply of coolant gas to the cooling inlets and thereby to the respective slag bed zones.

The present invention addresses the problems of the prior art by optimising the air flow to allow enough cooling to prevent agglomeration, whilst still allowing efficient recovery of wasted thermal energy, for example through a high temperature air off-take.

The slag material may be of any type, for example: metal-based, such as iron; a metal oxide, such as titanium oxide; a non-metal, such as slag generated as a byproduct of a metals production process; or a mixture thereof. Specific examples of metallurgical slags are blast furnace slag and steel mill slag, including converter slag and electric arc furnace slag.

The method may further comprise discharging cooled slag through a base of the slag receptacle according to determined average slag bed height or slag temperature at an outlet of the base.

The method may further comprise supplying the coolant gas in equal proportions to each zone of the slag bed until a minimum average height of the slag bed has been reached across the zones.

The method may further comprise detecting a reduction or termination of slag flow from a slag source, for example a blast furnace, which supplies the slag to the dry slag granulation system, and detecting a slag bed height below the minimum average height in at least one zone of the slag bed and reverting to supplying the coolant gas in equal proportions to each zone.

The method may further comprise: detecting a reduction or termination of slag flow from a slag source, for example a blast furnace, which supplies the slag to the dry slag granulation system; preventing further discharge of slag from the slag source to maintain average slag bed height at or above a required minimum height; and reducing or terminating the coolant gas flow to store energy until slag flow increases.

Heat recovery works most efficiently if the temperature is largely constant, but as the slag flow switches from a first to a second tap and so on, there will be decreases and increases. Buffering helps to alleviate the effects.

While a slag flow may typically be provided by a blast furnace, it will be understood that the invention is relevant to other sources of slag flow found in the general production of liquid raw iron, for example using the Corex (RTM) or Finex (RTM) processes.

The method may further comprise setting a slag bed threshold height below the minimum average height and an elapsed time from detection of termination of slag flow, and when both the threshold height and the elapsed time have been reached, reducing the coolant gas flow to the system.

The dry slag granulation system may comprise a plurality of the said height and temperature detectors, at least one of the height detectors and at least one of the temperature detectors being arranged to detect the height and temperature of a respective one of the slag bed zones.

The slag receptacle may comprise partition walls which separate the slag bed into portions, the portions corresponding to the said slag bed zones.

The coolant gas may comprise air.

The method may further comprise extracting air through a waste gas outlet and supplying it to a heat recovery unit.

According to another aspect of the invention there is provided a dry slag granulation system, comprising: a rotary atomising granulator; a slag receptacle, for supporting a slag bed which is formed thereon when slag particles are expelled from the granulator, the slag receptacle comprising a plurality of cooling inlets for cooling respective zones of the slag bed; at least one height detector and at least one temperature detector, for determining the height and temperature of the slag bed in the zones; and a controller, for selectively controlling, according to the slag bed height and temperature in the slag bed zones, a supply of coolant gas to the cooling inlets and thereby to the respective slag bed zones.

The slag receptacle may comprise partition walls which separate the slag bed into portions, the portions corresponding to the said slag bed zones. The system may further comprise a heat recovery unit and an air off-take coupled to the slag receptacle.

The slag receptacle may be arranged to support a plurality of slag bed zones at different levels in the slag receptacle and the system arranged to provide a coolant gas flow between each level.

An example of a slag granulation system and a method of controlling a supply of coolant gas to a dry slag granulation system according to the present invention will now be described with reference to the accompanying drawings in which:
Figure 1 illustrates an example of a dry slag granulation system according to the present invention;
Figure 2 is a block diagram illustrating part of the system of Fig.1;
Figures 3a and 3b show more detail of granulate zones formed in the system of the present invention;
Figure 4 is a graph of temperature distribution for the example of Figs.3a and 3b;
Figures 5a and 5b show an alternative arrangement of granulate zones;
Figure 6 illustrates a modification to the examples of Figs.3a, 3b, 5a and 5b;
   and,
Figure 7 is a flow diagram of an example of a method of controlling a supply of coolant gas to a dry slag granulation system according to the present invention.

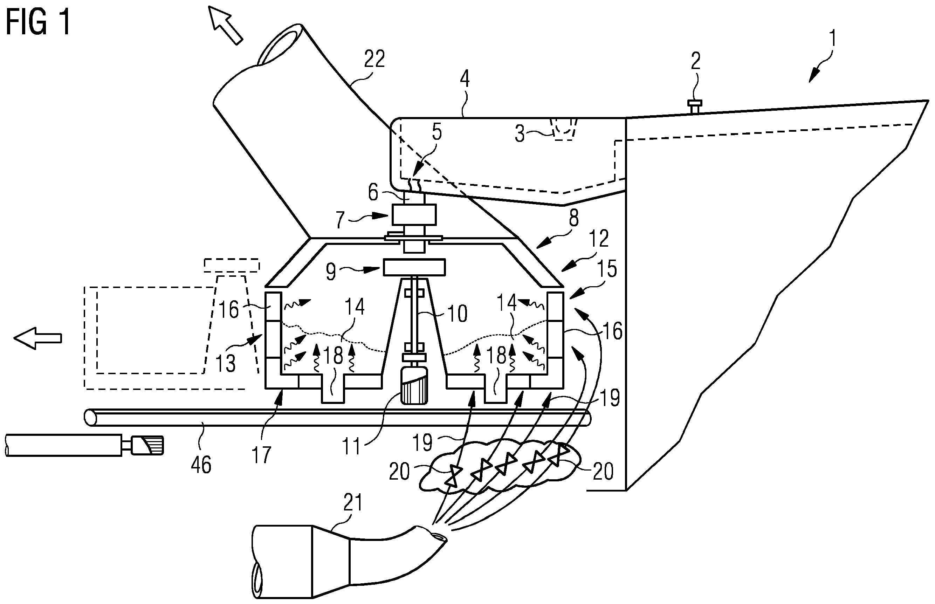

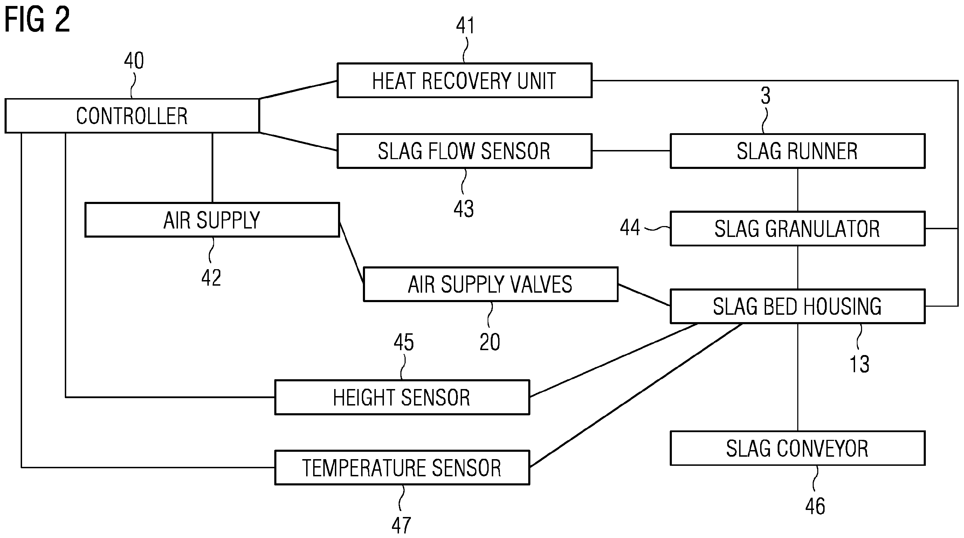

Fig.1 illustrates an example of a dry slag granulation system with the facility to extract hot waste air after the cooling process and direct it to a heat recovery unit 41. More detail of the system is shown in the block diagram of Fig.2. It has been proposed that a heat recovery unit could comprise a heat recovery chamber separate from the granulation chamber into which the granulated slag is provided. This separate heat recovery chamber is a relatively high structure with a narrow air passage to control the air flow to the heat recovery chamber which has a natural tendency of optimising the cooling effect of the air flowing though the slag in the heat recovery chamber. Unfortunately, due to the limitations on space in the area of the casthouse, installing this type of heat recovery unit with a granulation plant which is in-line with a slag flow coming from the bottom of a furnace is not practical due to the excessive height of the heat recovery chamber.

From the casthouse floor 1, molten slag 2 at approximately 1450°C runs along a slag runner 3 (and optionally, into a tundish 4) and is directed through an opening 5 into a delivery pipe 6 and onto a rotating cup or disc 9 of a rotary atomising granulator 44 in a granulation housing or chamber 8. Optionally, a control valve 7 may be provided at the end of the delivery pipe. The disc is mounted on a shaft 10 for rotation, driven by a motor 11, external to the granulation chamber 8. Walls 12 of an inclined annular roof of the slag granulation chamber 8 are externally water cooled, such that slag granules formed as they are projected through the air from the spinning disc 9 come into contact with the cooled wall 12 and solidify before falling down into a lower section 13 to form a bed of granulate 14.

The lower section 13 in which the granulate collects comprises substantially vertical walls 15 provided with openings 16 into which cooling air may be directed. The lower section 13 is essentially a receptacle or collector for the slag granulate and it will be understood that it may take any appropriate shape or structure for this purpose. The granulation chamber 8 has a base 17 comprising a plurality of granulate outlets 18 and cooling air inlets 19. All or most of the cooling of the granulate is provided by the air inlets 19 on the base, with the cooling air directed to the openings 16 in the side walls 15 being mainly for the purpose of protecting the granulation chamber structure itself. The lower section 13 and the rotary atomising granulator can be easily slid out from between the conveyor and the roof for maintenance, such as to replace the cup or disc.

Cold air for cooling is supplied at approximately ambient up to 150°C from a cooling air supply 42 into the chamber 8 and each air inlet 16, 19 coming from the air supply main 21 is provided with a valve 20, so that the flow of air at each inlet 16, 19 can be controlled individually. The air supply from the main 21 to the base of the chamber may be further pressurised in the duct to enable the air to get through the height of material in the slag bed and overcome the pressure drop. Cooled granulated slag is removed from the base 17 of the granulation chamber through the outlets 18 and drops onto a discharge conveyor 46. At the top of the granulation chamber 8, above the inclined walls, a hot air outlet 22 is coupled to the granulation chamber and extracts air which has passed over, or through, the hot slag granulate. This hot air passes along the outlet, for example a 3m diameter main to the heat recovery unit 41, in which the air may pass into heat tubes in a boiler which either raises steam to drive a turbine, or provides heat to a heat exchanger. However, other ways of using the recovered heat from the hot air outlet are equally applicable.

The present invention optimises the air flow in the slag granulation system by reducing air flow to raise the air off-take temperature, so that heat recovery is more efficient, whilst still allowing production of slag granules suitable for use in a downstream industry.

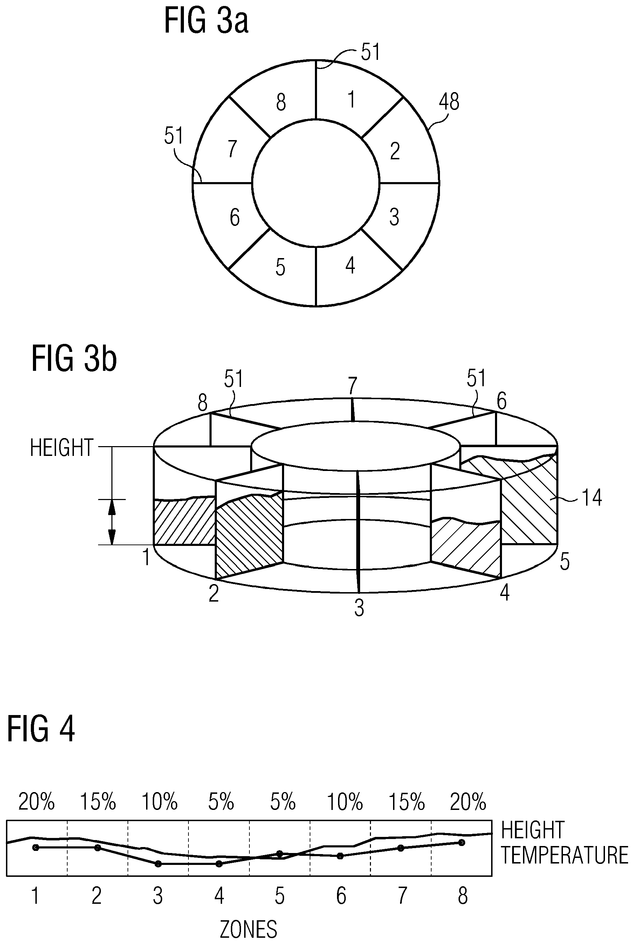

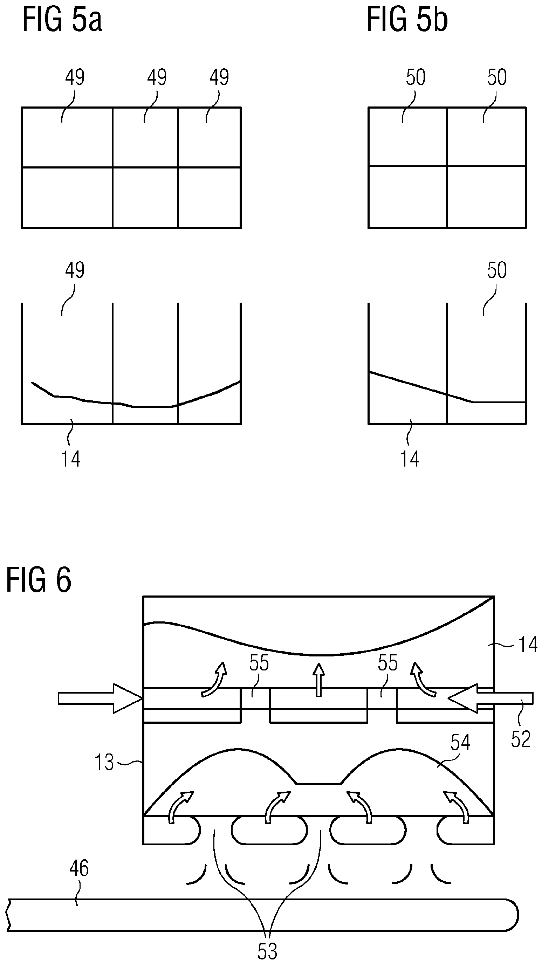

Over the whole area of the slag bed, there may be variations in height of slag and also variations in the temperature. Temperature sensors 50, such as thermocouples, are distributed across the base 14 and are connected to a controller 40 which is able to process the temperature information that they provide. The slag bed on the base may be divided up into zones as illustrated in Figs.3a, 3b, 5a and 5b, in this case each zone being associated with one temperature sensor 47 and one height detector 45 as well as one of the cooling air inlets 19. Using the data from the height measuring device and the known volume in the zone, mass in that zone can be calculated and zones with a greater concentration of energy, e.g. higher temperatures for the same mass are targeted with a higher proportion of the total airflow than zones with a lower temperature for that mass.

While in this exemplary embodiment there is one temperature sensor 47 and one height detector 45 in each zone, in other embodiments there may be a different number of detectors for determining the height and temperature of the slag bed in the zones. For example, any one of the zones may be monitored by multiple height and temperature detectors. Or, one height detector and one temperature detector may monitor the height and temperature in multiple zones. Thus it will be understood by the skilled reader that a variety of detector arrangements is feasible, as long as it is possible to determine the height and temperature of the slag bed in each of the slag bed zones.

Fig.4 shows an example of how variations of the height of the slag bed and temperature in each zone determine the proportion of the airflow directed into each zone. Fig.4 shows zone 1 and zone 8 receive 20% of the available airflow each, zone 2 and zone 7 receive 15% of the available airflow each, zone 3 and zone 6 receive 10% of the available airflow each and zone 4 and zone 5 each receive 5% of the available airflow. This is purely exemplary and the actual distribution may differ from that described and may vary over time. The solution locates the area of greatest energy density in the bed of granulated material and directs more air to that particular area, with less air going to zones having a lower energy concentration, thus optimising the overall air usage and saving energy. The highest energy density of heat energy is located and increased air flow is directed to that area at the expense of less energy dense parts.

A significant advantage of the present invention is that the granulate bed may be kept relatively shallow, compared to a conventional tall stacked bed used in prior art cooling methods and so can be fitted into the space available beside the casthouse to receive slag from the slag runner without having to excavate the floor to maintain a gravity feed of the molten material tapped from the bottom of the blast furnace.

In the example of Figs.3a and 3b illustrating one embodiment of a zoned slag bed, separating or partition walls 51 are provided at an even spacing around the central circumference of an annulus to form portions of the slag bed which correspond to the plurality of slag bed zones. In this example, there are eight zones, but other numbers, such as four, five or six zones are possible. The walls could alternatively be unevenly spaced. In each zone, the height of slag granulate 14 is illustrated. In this embodiment the structural walls 51 define chambers through which air is blown from the base 17. Ideally, the level of granulate would be no more than half to three quarters of the height of the walls 51 of each chamber, so the air must be controlled to get the granulate down to a suitable temperature for discharging to the conveyor 46 before the new incoming granulate piles up too much in the chamber.

While in this exemplary embodiment the zones of the slag bed are effectively defined by the structural walls 51, in other embodiments the structural walls are omitted and the slag bed zones are effectively defined according to the positions of the spaced cooling air inlets 19. That is, in those other embodiments, the slag bed is physically continuous and the slag bed zones are notional zones rather than physically separated zones. Thus, while structural walls may be conveniently used to arrange the slag bed into separate zones, these walls are not essential to the function of the invention. In their absence, the slag bed may be thought of as comprising a plurality of notional zones, each of which is associated with and affected by a respective cooling air inlet 19. The skilled reader will understand that in this case the boundary between any two neighbouring zones may be "blurred", due to the lack of a physical structure separating the zones, but nevertheless the temperature of each of the two zones will be influenced and controlled primarily according to the air flow from its own respective cooling air inlet 19, with only a comparatively small effect at the boundary region from the cooling air inlet 19 of its neighbour.

The signals from the temperature sensors 47 in each area are used by the controller 40 to alter the air supply, opening or closing the valves by degrees to increase or reduce the amount of air flow in each zone, or maintaining a constant flow when there is no significant change in the energy density in that chamber.

Figs 5a and 5b illustrate an alternative embodiment in which the annular slag granulation chamber is mounted above a rectangular bed (5a) or square bed (5b) for collecting the granulate. This base is physically divided up into zones 49, 50 (or alternatively the slag bed may be notionally divided into zones as described herein above), each of which may have different areas, or the same sized area. A typical granulate bed wall 13 may be 1m to 2m in height, but the fall of the granulated slag may result in the outer edges having a higher covering of granulate than toward the inner edges or the centre, for example a bed with a height of material 14 of 1 m on one edge and only 0.5 m on the other edge. It is desirable to keep the average height at a steady value, for example about 0.75m, despite the variations across the base and to achieve sufficient reduction in temperature of the slag to get down to 150°C before discharging the slag so as to avoid damage to the structure and the conveyor due to excessive temperatures. If the slag granulate is formed of predominantly smaller particles, the slag bed is less porous and air takes longer to flow through and cool the granulate. If the slag granulate is formed predominantly of larger particles, then the air flows through more quickly, but must dissipate more energy from each particle as it does so.

It is desirable that the average height is maintained at a predetermined height, so that even at a low point in the slag bed height, there is still an even pressure drop. If the temperature goes up too much however, then it may be necessary to allow the average height to increase, so that the dwell time of the slag granulate is longer to allow them to be cooled sufficiently before discharge. Typically, the granulate should be at or below 150°C before it is discharged, whereas at times it will be well above this, e.g. 250°C, so cooling is required. The base of the slag bed housing is arranged so that it can open and discharge the cooled slag through the bottom at intervals, Discharge is controlled according to the average height, or measured temperature.

In both of the examples given above, as well as dividing the slag bed formation area into zones (physically by means of one or more structural (e.g. vertical) dividers, or notionally as described herein above), the base may be arranged over two levels with cooling air passages between the upper and lower levels, to improve the rate of cooling in the slag bed, for example as illustrated in Fig.6. On the first level, a slag bed 14 forms as previously described, but instead of being cooled by airflow from the base, an additional intermediate cooling level is included, with an air supply duct 52 having inlets for the air to be pumped into the slag bed 14 and openings 55 to allow cooled slag to drop through to a second level where a slag bed 54 forms again and is cooled by the air from the air inlets in the base. Having cooled sufficiently, the granulate is released through outlets 53 onto the conveyor as in the previous examples. The openings 55, 53 in each level to let the slag through may be offset to redistribute the slag to enhance cooling.

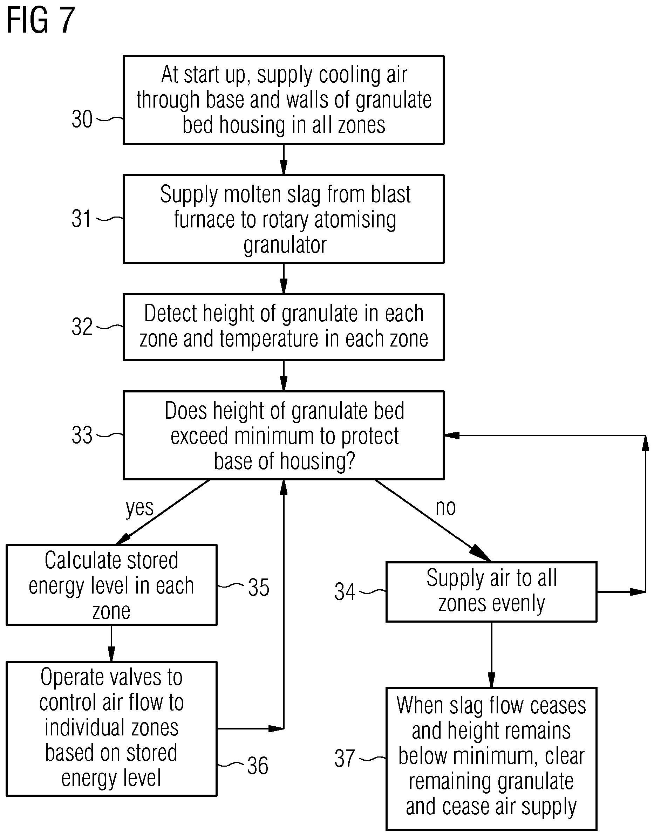

Fig.7 is a flow diagram of a method of optimising air flow according to the invention, in a dry slag granulation process. At start up cooling air is supplied 30 through the base 17 of the granulation chamber and through the walls 13 of the granulation chamber housing in all zones. Molten slag is supplied 31 to the rotary atomising granulator through a slag runner from the blast furnace. The height of granulate in each zone and the temperature in each zone is detected 32 and the information provided to the controller 40. If the height of granulate bed exceeds 33 the minimum necessary to protect the base of the granulator housing or chamber, then optimisation of the airflow can commence. In the controller, the stored thermal energy level, or energy density, in each zone is calculated 35 to determine what proportion of the air flow each zone requires. The controller sends signals to operate 36 the valves 20 to control airflow to individual zones based on the stored energy level. Until the height of granulate bed has reached the minimum coverage required to protect the base, air is supplied 34 to all zones in equal proportions. If the supply of slag is running as a batch process, a slag flow sensor provides a signal to the controller when the slag flow ceases. The height sensor subsequently detects the height dropping below a minimum required and even airflow restarts. If the height remains below the minimum for a predetermined period, the remaining granulate is cleared onto the conveyor and the air supply ceases 37.

Even in the regions of each zone with a relatively low height of granulate, there will be a minimum airflow as the temperature needs to be brought down over the course of processing the slag from the molten slag temperature of 1450°C, which may have cooled to around 1300°C by the time it reaches the rotating cup and cools further during the flight phase of the granulation process, to the discharge temperature of around 150°C. However, in areas where the bed is high the temperature may still be around 700°C, which could damage the steel structure if no cooling air was supplied. Thus, a minimum of 5% of the total airflow may be directed in the relatively low height regions, whereas in higher, hotter regions, there may be as much as 20% of the total airflow. The absolute airflow may be reduced by as much as half, as compared with a system which directs the same amount of airflow to all areas of the bed. Although, the hotter areas need the full amount of available airflow, the cooler areas manage on far less, so only a fraction of the fan power needs to be used.

A consequence of this tailoring of the air flow to the cooling requirement is that the air temperature at the surface of the bed of material is higher, so air taken out through the off-take is at a higher temperature so that the boiler operates more efficiently. Air inlets blow air into the chamber then out of the top and into a 3m diameter main. The majority of the cooling air is fed in through the bottom of the slag granulate bed, but additional airflow into the sidewalls protects the structure from the heat of the slag bed. In addition, an air inlet at a level between the water jacket and the top of the slag granulate collection chamber where granulate is deflected off the walls, sets up a cyclone effect cushioning the granules and keeping them in flight for longer. Air from all these sources is extracted through the heat recovery unit. For operation, the boiler needs the air to be at least 450°C, but more efficient operation of the boiler is obtained if the air is nearer to 600°C. The air from the boiler tubes may be recirculated as cooling air once heat has been extracted from it in the boiler, or heat exchanger. As the structure of the base onto which the granulated slag falls is rated for a temperature below the temperature of the slag granulate when the granulate lands, then on start up, more air is required to cool the initial granulate quickly to prevent damage to the structure. As a protective layer of cooling granulate forms on the bed over time, the air flow can be optimised according to the depth and temperature in each zone from then on.

## Claims

1. A method of controlling a supply of coolant gas to a dry slag granulation system, the system comprising:
a rotary atomising granulator;
a slag receptacle, for supporting a slag bed which is formed thereon when slag particles are expelled from the granulator, the slag receptacle comprising a plurality of cooling inlets, each cooling inlet being positioned for cooling a respective zone of the slag bed; and
at least one height detector and at least one temperature detector, for determining the height and temperature of the slag bed in the zones,
the method comprising:
determining a height of the slag bed in the zones;
determining a temperature of the slag bed in the zones;
determining a heat energy density of the slag bed in the zones
based on the determined height and temperature; and
supplying a coolant gas to the cooling inlets to cool the slag bed in the respective zones, the supply of the coolant gas to the cooling inlets being selectively controlled to provide a greater amount of coolant gas to zones of the slag bed having a higher heat energy density and a lesser amount of coolant gas to zones of the slag bed having a lower heat energy density, so as to optimise the usage of the coolant gas.

2. A method according to claim 1, further comprising discharging cooled slag through a base of the slag receptacle according to determined average slag bed height or slag temperature at an outlet of the base.

3. A method according to claim 1 or 2, further comprising supplying the coolant gas in equal proportions to each zone of the slag bed until a minimum average height of the slag bed has been reached across the zones.

4. A method according to claim 3, further comprising detecting a reduction or termination of slag flow from a slag source, which supplies the slag to the dry slag granulation system, and detecting a slag bed height below the minimum average height in at least one zone of the slag bed and reverting to supplying the coolant gas in equal proportions to each zone.

5. A method according to any of claims 1 to 3, further comprising:
detecting a reduction or termination of slag flow from a slag source, which supplies the slag to the dry slag granulation system;
preventing further discharge of slag from the slag source to maintain average slag bed height at or above a required minimum height; and
reducing or terminating the coolant gas flow to store energy until slag flow increases.

6. A method according to any one of claims 3 to 5, further comprising setting a slag bed threshold height below the minimum average height and an elapsed time from detection of termination of slag flow, and when both the threshold height and the elapsed time have been reached, reducing the coolant gas flow to the system.

7. A method according to any preceding claim, wherein the dry slag granulation system comprises a plurality of the said height and temperature detectors, at least one of the height detectors and at least one of the temperature detectors being arranged to detect the height and temperature of a respective one of the slag bed zones.

8. A method according to any preceding claim, wherein the slag receptacle comprises partition walls which separate the slag bed into portions, the portions corresponding to the said slag bed zones.

9. A method according to any preceding claim, wherein the coolant gas comprises air.

10. A method according to any preceding claim, further comprising extracting air through a waste gas outlet and supplying it to a heat recovery unit.

11. A dry slag granulation system, comprising:
a rotary atomising granulator;
a slag receptacle, for supporting a slag bed which is formed thereon when slag particles are expelled from the granulator, the slag receptacle comprising a plurality of cooling inlets, each cooling inlet being positioned for cooling a respective zone of the slag bed;
at least one height detector and at least one temperature detector, for determining a height and a temperature of the slag bed in the zones, the system being configured to determine a heat energy density of the slag bed in the zones based on the determined height and temperature; and
a controller, for selectively controlling a supply of coolant gas to the cooling inlets to cool the slag bed in the respective zones, the selective control providing a greater amount of coolant gas to zones of the slag bed having a higher heat energy density and a lesser amount of coolant gas to zones of the slag bed having a lower heat energy density, so as to optimise the usage of the coolant gas.

12. A system according to claim 11, wherein the slag receptacle comprises partition walls which separate the slag bed into portions, the portions corresponding to the said slag bed zones.

13. A system according to claim 11 or 12, further comprising a heat recovery unit and an air off-take coupled to the slag receptacle.

## Patentansprüche

1. Verfahren zur Steuerung einer Zufuhr von Kühlgas zu einem Trockenschlackengranulierungssystem, wobei das System das Folgende umfasst:
einen rotierenden Zerstäubungsgranulator;
ein Schlackenauffanggefäß zur Unterstützung eines darauf ausgebildeten Schlackenbetts, wenn Schlackenteilchen aus dem Granulator ausgeworfen werden, wobei das Schlackenauffanggefäß eine Vielzahl von Kühleinlässen umfasst, wobei jeder Kühleinlass zum Kühlen einer jeweiligen Zone des Schlackenbetts angeordnet ist; und
mindestens einen Höhendetektor und mindestens einen Temperaturdetektor zur Bestimmung der Höhe und Temperatur des Schlackenbetts in den Zonen,
wobei das Verfahren das Folgende umfasst:
Bestimmen einer Höhe des Schlackenbetts in den Zonen;
Bestimmen einer Temperatur des Schlackenbetts in den Zonen;
Bestimmen einer Wärmeenergiedichte des Schlackenbetts in den Zonen auf Basis der ermittelten Höhe und Temperatur; und
Zuführen eines Kühlgases zu den Kühleinlässen zum Kühlen des Schlackenbetts in den jeweiligen Zonen, wobei die Zufuhr des Kühlgases zu den Kühleinlässen selektiv gesteuert wird, um eine größere Menge an Kühlgas für Zonen des Schlackenbetts mit einer höheren Wärmeenergiedichte und eine kleinere Menge an Kühlgas für Zonen des Schlackenbetts mit einer geringeren Wärmeenergiedichte bereitzustellen, um so die Verwendung des Kühlgases zu optimieren.

2. Verfahren nach Anspruch 1, ferner umfassend die Entleerung von gekühlter Schlacke durch einen Boden des Schlackenauffanggefäßes gemäß der ermittelten durchschnittlichen Schlackenbetthöhe oder Schlackentemperatur an einem Auslass des Bodens.

3. Verfahren nach Anspruch 1 oder 2, ferner umfassend die Zufuhr des Kühlgases in gleichmäßigen Anteilen zu jeder Zone des Schlackenbetts, bis eine durchschnittliche Mindesthöhe des Schlackenbetts über den Zonen erreicht wurde.

4. Verfahren nach Anspruch 3, ferner umfassend den Nachweis einer Verringerung oder eines Endes des Schlackenflusses von einer Schlackenquelle, die die Schlacke zum Trockenschlackengranulierungssystem zuführt, und den Nachweis einer Schlackenbetthöhe unter der durchschnittlichen Mindesthöhe in mindestens einer Zone des Schlackenbetts und Zurückkehren zur Zufuhr des Kühlgases in gleichmäßigen Anteilen zu jeder Zone.

5. Verfahren nach einem der Ansprüche 1 bis 3, ferner umfassend:
Nachweis einer Verringerung oder eines Endes des Schlackenflusses von einer Schlackenquelle, die die Schlacke zum Trockenschlackengranulierungssystem zuführt;
Verhinderung einer weiteren Abgabe von Schlacke von der Schlackenquelle, um die durchschnittliche Schlackenbetthöhe bei oder über einer erforderlichen Mindesthöhe zu halten; und
Verringerung oder Beendigung des Kühlgasflusses zum Speichern von Energie, bis der Schlackenfluss zunimmt.

6. Verfahren nach einem der Ansprüche 3 bis 5, ferner umfassend das Einstellen eines Schwellenwerts der Schlackenbetthöhe unter der durchschnittlichen Mindesthöhe und einer verstrichenen Zeit ab dem Nachweis des Endes des Schlackenflusses, und wenn sowohl die Schwellenwerthöhe als auch die verstrichene Zeit erreicht wurden, Verringerung des Kühlgasflusses zum System.

7. Verfahren nach einem der vorhergehenden Ansprüche, wobei das Trockenschlackengranulierungssystem eine Vielzahl der Höhen- und Temperaturdetektoren umfasst, wobei mindestens einer der Höhendetektoren und mindestens einer der Temperaturdetektoren zum Nachweisen der Höhe und Temperatur einer jeweiligen der Schlackenbettzonen angeordnet ist.

8. Verfahren nach einem der vorhergehenden Ansprüche, wobei das Schlackenauffanggefäß Trennwände umfasst, die das Schlackenbett in Portionen unterteilen, wobei die Portionen den Schlackenbettzonen entsprechen.

9. Verfahren nach einem der vorhergehenden Ansprüche, wobei das Kühlgas Luft umfasst.

10. Verfahren nach einem der vorhergehenden Ansprüche, ferner umfassend das Abziehen von Luft durch einen Abgasauslass und das Zuführen der Luft zu einer Wärmerückgewinnungseinheit.

11. Trockenschlackengranulierungssystem, umfassend:
einen rotierenden Zerstäubungsgranulator;
ein Schlackenauffanggefäß zur Unterstützung eines darauf ausgebildeten Schlackenbetts, wenn Schlackenteilchen aus dem Granulator ausgeworfen werden, wobei das Schlackenauffanggefäß eine Vielzahl von Kühleinlässen umfasst, wobei jeder Kühleinlass zum Kühlen einer jeweiligen Zone des Schlackenbetts angeordnet ist;
mindestens einen Höhendetektor und mindestens einen Temperaturdetektor zur Bestimmung einer Höhe und einer Temperatur des Schlackenbetts in den Zonen, wobei das System dazu ausgelegt ist, eine Wärmeenergiedichte des Schlackenbetts in den Zonen auf Basis der ermittelten Höhe und Temperatur zu bestimmen; und
eine Steuerung zur selektiven Steuerung einer Zufuhr von Kühlgas zu den Kühleinlässen zum Kühlen des Schlackenbetts in den jeweiligen Zonen, wobei die selektive Steuerung eine größere Menge an Kühlgas für Zonen des Schlackenbetts mit einer höheren Wärmeenergie und eine kleinere Menge an Kühlgas für Zonen des Schlackenbetts mit einer geringeren Wärmeenergiedichte bereitstellt, um die Verwendung des Kühlgases zu optimieren.

12. System nach Anspruch 11, wobei das Schlackenauffanggefäß Trennwände umfasst, die das Schlackenbett in Portionen unterteilen, wobei die Portionen den Schlackenbettzonen entsprechen.

13. System nach Anspruch 11 oder 12, ferner umfassend eine Wärmerückgewinnungseinheit und eine mit dem Schlackenauffanggefäß verbundene Luftableitung.

## Revendications

1. Procédé de régulation d'une alimentation en gaz réfrigérant d'un système de granulation de scories à sec, le système comprenant :
un granulateur rotatif à atomisation ;
un réceptacle à scories, destiné à supporter un lit de scories qui se forme sur lui lorsque des particules de scories sont expulsées du granulateur, le réceptacle à scories présentant une pluralité d'entrées de refroidissement, chaque entrée de refroidissement étant positionnée de manière à refroidir une zone respective du lit de scories ; et
au moins un détecteur de hauteur et au moins un détecteur de température, pour déterminer la hauteur et la température du lit de scories dans les zones,
le procédé comprenant :
la détermination d'une hauteur du lit de scories dans les zones ;
la détermination d'une température du lit de scories dans les zones ;
la détermination d'une densité d'énergie thermique du lit de scories dans les zones en fonction de la hauteur et de la température déterminées ; et
l'alimentation en gaz réfrigérant des entrées de refroidissement pour refroidir le lit de scories dans les zones respectives, l'alimentation en gaz réfrigérant des entrées de refroidissement faisant l'objet d'une régulation sélective pour fournir une plus grande quantité de gaz réfrigérant aux zones du lit de scories ayant une densité d'énergie thermique plus élevée et une moins grande quantité de gaz réfrigérant aux zones du lit de scories ayant une densité d'énergie thermique plus faible, de manière à optimiser l'utilisation du gaz réfrigérant.

2. Procédé selon la revendication 1, comprenant en outre la décharge des scories refroidies à travers un fond du réceptacle à scories en fonction d'une hauteur moyenne déterminée du lit de scories ou d'une température des scories au niveau d'une sortie du fond.

3. Procédé selon la revendication 1 ou 2, comprenant en outre l'alimentation d'un gaz réfrigérant en proportions égales dans chaque zone du lit de scories jusqu'à ce qu'une hauteur moyenne minimale du lit de scories ait été atteinte dans les zones.

4. Procédé selon la revendication 3, comprenant en outre la détection d'une réduction ou d'un arrêt de l'écoulement de scories depuis une source de scories qui alimente en scories le système de granulation de scories à sec, et la détection d'une hauteur de lit de scories inférieure à la hauteur moyenne minimale dans au moins une zone du lit de scories et la reprise d'alimentation d'un gaz réfrigérant en proportions égales dans chaque zone.

5. Procédé selon l'une quelconque des revendications 1 à 3, comprenant en outre :
la détection d'une réduction ou d'un arrêt de l'écoulement de scories depuis une source de scories qui alimente en scories le système de granulation de scories à sec ;
l'empêchement de la poursuite du déchargement de scories depuis la source de scories pour maintenir une hauteur moyenne du lit de scories à une hauteur minimale requise ou au-dessus ; et
la réduction ou l'arrêt de l'écoulement de gaz réfrigérant pour économiser de l'énergie jusqu'à ce que l'écoulement de scories augmente.

6. Procédé selon l'une quelconque des revendications 3 à 5, comprenant en outre la fixation d'une hauteur seuil de lit de scories en dessous de la hauteur moyenne minimale et un temps écoulé depuis la détection de l'arrêt de l'écoulement de scories et, lorsque la hauteur seuil et le temps écoulé sont tous les deux atteints, la réduction de l'écoulement de gaz réfrigérant vers le système.

7. Procédé selon l'une quelconque des revendications précédentes, dans lequel le système de granulation de scories à sec comprend une pluralité des dits détecteurs de hauteur et de température, au moins un des détecteurs de hauteur et au moins un des détecteurs de température étant agencés pour détecter la hauteur et la température d'une zone respective parmi les zones du lit de scories.

8. Procédé selon l'une quelconque des revendications précédentes, dans lequel le réceptacle à scories comprend des parois de séparation qui séparent le lit de scories en portions, les portions correspondant aux dites zones du lit de scories.

9. Procédé selon l'une quelconque des revendications précédentes, dans lequel le gaz réfrigérant comprend l'air.

10. Procédé selon l'une quelconque des revendications précédentes, comprenant en outre l'extraction de l'air à travers une sortie de gaz d'échappement et la transmission à une unité de récupération de chaleur.

11. Système de granulation de scories à sec, comprenant :
un granulateur rotatif à atomisation ;
un réceptacle à scories, destiné à supporter un lit de scories qui se forme sur lui lorsque des particules de scories sont expulsées du granulateur, le réceptacle à scories présentant une pluralité d'entrées de refroidissement, chaque entrée de refroidissement étant positionnée de manière à refroidir une zone respective du lit de scories ;
au moins un détecteur de hauteur et au moins un détecteur de température, pour déterminer une hauteur et une température du lit de scories dans les zones, le système étant conçu pour déterminer une densité d'énergie thermique du lit de scories dans les zones en fonction de la hauteur et de la température déterminées ; et
un régulateur, permettant une régulation sélective de l'alimentation en gaz réfrigérant des entrées de refroidissement pour refroidir le lit de scories dans les zones respectives, la régulation sélective permettant de fournir une plus grande quantité de gaz réfrigérant aux zones du lit de scories ayant une densité d'énergie thermique plus élevée et une moins grande quantité de gaz réfrigérant aux zones du lit de scories ayant une densité d'énergie thermique plus faible, de manière à optimiser l'utilisation du gaz réfrigérant.

12. Système selon la revendication 11, dans lequel le réceptacle à scories comprend des parois de séparation qui séparent le lit de scories en portions, les portions correspondant aux dites zones du lit de scories.

13. Système selon la revendication 11 ou 12, comprenant en outre une unité de récupération de chaleur et une conduite d'évacuation d'air couplées au réceptacle à scories.
